# EUROPEAN PATENT SPECIFICATION

(11) **EP 1 533 205 B1**
(45) Date of publication and mention of the grant of the patent: **09.07.2008**
(21) Application number: 04026597.7
(22) Date of filing: 09.11.2004
(51) Int. Cl.: B61K 13/04, B61D 23/00, F21S 4/00

(54) **Vehicle with a door step comprising a security lighting.**
Fahrzeug mit einem Türtrittbrett, mit einer Sicherheitsbeleuchtung.
Véhicule avec marchepied de porte, comportant un éclairage de sécurité.

(30) Priority: 18.11.2003 JP 2003388367
(43) Date of publication of application: 25.05.2005
(73) Proprietor: TOKYU CAR CORPORATION, Yokohama-shi Kanagawa 236-0043 (JP)
(72) Inventor: Asaka, Tetsuya, Yokohama-shi Kanagawa 236-0043 (JP); Matsumura, Hiroshi, Yokohama-shi Kanagawa 236-0043 (JP); Suzuki, Hisao, Yokohama-shi Kanagawa 236-0043 (JP)
(74) Representative: Grünecker, Kinkeldey, Stockmair & Schwanhäusser Anwaltssozietät

(56) References cited:
- DE-U1- 20 205 304
- GB-A- 2 324 901
- PATENT ABSTRACTS OF JAPAN vol. 2000, no. 07, 29 September 2000 (2000-09-29) & JP 2000 108898 A (NIPPON SHARYO SEIZO KAISHA LTD; CENTRAL JAPAN RAILWAY CO), 18 April 2000 (2000-04-18)
- PATENT ABSTRACTS OF JAPAN vol. 2000, no. 11, 3 January 2001 (2001-01-03) & JP 2000 219130 A (KARASAWA SHIN; NAKAGAWA HIDEO), 8 August 2000 (2000-08-08)

## Description

### BACKGROUND OF THE INVENTION

### Field of the Invention

The present invention relates to a vehicle.

### Related Background of the Invention

Vehicles have various safety measures for passengers and other persons. For example, rolling stocks which have been generally used heretofore are equipped with automatically or manually operating doors at doorways of a vehicle body, allowing to be opened and closed freely, and threshold plates are fixed on the floor side of individual doorways. The threshold plates contribute to prevention of floor abrasion, floor reinforcement and slip prevention when passengers are getting on or off through doorways. (For example, refer to Japanese Patent Laid-Open No. 2000-108898.)

From DE 20205304 U1 it is known to add light reflecting strips on the threshold plate to improve the security of the passenger. As a further measure, GB-A-2324901 foresees an array of LED's in the nose of the step.

Each of the threshold plates used in the above-described conventional rolling stocks has an adequate shape for passenger's convenience, and secures safety of passengers by means of slip stoppers or the like when they get on or off the vehicle.

### SUMMARY OF THE INVENTION

Incidentally, there is a specified gap and a difference in level between the platform and the vehicle. There is a means on a platform to induce recognition of the presence of a gap and a difference in level to passengers and a measure to clearly suggest the presence of doorways of a vehicle to physically handicapped persons, aged people, and others, but there is no such means on a rolling stock side.

An object of the present invention is to provide a vehicle which is arranged so that safety of passengers and crew can be secured when getting on or off a vehicle.

The vehicle according to the present invention comprises:
- a door for opening and closing a doorway of a vehicle body, and a light section for emitting light, which is provided along the lower edge of the doorway;
- a holder unit for attaching the light section to the vehicle body. The holder unit includes a step section which is in flat plate shape and is fixed to the vehicle body substantially horizontally, and a light-holder section for providing a space in which the light section is set. The light-holder section is provided on the outer end of the step section and protrudes downward from the step section;
- an opening for setting the light section in a long shape within the space therefrom is provided at an upper portion of the light-holder section, and the light section comprises a plurality of LEDs arranged in a direction of the doorway width, and a casing for accommodating the LEDs, wherein the casing is provided with a partition for separating a water-tight light-source containing space which is formed at an upper part of the casing and accommodates the LEDs, from a screw containing space which is formed at a lower part of the casing and accommodates a screw seat, a bottom wall which has a screw-insertion hole opened at a position corresponding to a position of a female screw formed in the screw seat, and a top wall through which the light emitted from the LEDs transmits.

According to the vehicle of the present invention, lighting or flickering by the light section allows the vehicle side to warn the presence of a gap and a difference in level between the edge of platform and the vehicle body, which improves safety of passengers and the crew getting on or off the vehicle.

Preferably the light section is provided along the lower edge of the doorway outside of the vehicle body, and preferably the light section emits the light upward. According to such structure, the position of the lower edge of the doorway can be clearly indicated.

The holder unit has a step section in substantially horizontally flat plate shape, which functions as a foot-step. Since the light section is set in the light-holder section provided on the outer end of the step section, lighting or flickering of the light section allows a vehicle side to warn the presence of a gap or a difference in level between the edge of platform and the vehicle, and give clear suggestion of the presence of doorway of the vehicle to physically handicapped persons, aged people, and others. In particular, lighting or flickering of the light section is effective when the platform does not give any clear indication of the position of the doorway (entrance). Therefore, adoption of such holder unit is extremely effective as a facility for smooth getting on or off the vehicle, and is extremely effective to secure further safety of passengers and the crew. In addition, according to the structure, the light section is fixed to the vehicle body via the holder unit so that handling of the light section becomes easy.

In the present invention, it is preferable that a floor face inside the vehicle and the top face of the step section are arranged along a predetermined standard face. With such structure, the difference in level between the step section and the floor face in the vehicle becomes small, thus safety around the doorway can be further improved. Preferably the vehicle according to the present invention further includes a support face for supporting the step section, and the support face is located below the predetermined standard face. Adoption of the support face readily allows matching of the floor face inside the vehicle and the top face of the step section with the above-described predetermined standard face.

In the vehicle of the present invention, the light-holder section is preferably protruded downward from the floor face outside the vehicle body. With such structure, the light-holder section does not hinder the doorway so that safety of the vehicle is further improved.

In the vehicle of the present invention, the top face of the step section is preferably provided with a slip stopper section which is an uneven shape. According to such structure, safety on slippery surface on rainy or snowy days is ensured in addition to the safety owing to the lighting or flickering of the light section.

The vehicle of the present invention preferably further comprises a connector container case for containing a connector terminal of the light section, and the connector container case is preferably detachable from a side frame of the vehicle body. In that case, when the connector container case is detached from the vehicle body, the connection between the connecter terminal extended from the light section and the connector terminal extended from the vehicle body can be released, which allows readily replacing the burnt-out light source during maintenance.

According to the structure of the holder unit, the light-holder section has the opening so that the mounting and dismounting of the light section is easily executed. Therefore, the structure allows readily replacing a burnt-out light-source. In addition, adoption of LEDs as the light source makes the control of lighting or flickering of light easy. Furthermore, a space in the casing is divided into the light-source containing space and the screw-containing space by the partition. Consequently, when the light section is fixed to the light-holder section using the screw, water penetration through the screw-insertion hole and/or the female screw section is blocked by the partition, thus the water does not reach the light-source containing space, which prevents the LEDs contained in the light-source containing space from breaking.

The vehicle of the present invention preferably has a light-emission control section which controls supply of current for emitting light from the light section, wherein the light-emission control section comprises: a first switch circuit which supplies current to the light section when receiving a release signal to enable the door to be opened, and stops current supply to the light section when receiving a close signal to close the door; and a second switch circuit which stops current supply to the light section while the door is kept closed and supplies current to the light section while the door is kept opened.

According to the structure, when the door is enabled to be opened manually, current is supplied to the light section, and while the door are kept closed, current supply to the light section is stopped, whereby unnecessary power consumption is suppressed. When the door is enabled to be opened manually, current is supplied to the light section so that the light section can emit the light before opening the door. The first switch circuit and the second switch circuit are preferably arranged in parallel between an electric potential line and an input terminal of the light section.

In the vehicle of the present invention, the light-emission control section preferably further comprises a third switch circuit which stops current supply to the light section when a room light of the vehicle is kept turned-off state. According to such structure, current supply to the light section becomes possible only when the room light of the vehicle is turned on, which further suppresses unnecessary power consumption. In addition, it is possible to supply current to the light section only when light emission is required during nighttime, and the like.

### BRIEF DESCRIPTION OF THE DRAWINGS

Fig. 1 shows a perspective view of a rolling stock of an embodiment of the vehicle according to the present invention.
Fig. 2 shows a perspective view of a threshold plate applied to the rolling stock.
Fig. 3 shows a cross-sectional view of a doorway to which the threshold plate is fixed.
Fig. 4 shows an exploded perspective view of the threshold plate.
Fig. 5 shows a perspective view of the threshold plate.
Fig. 6 shows a cross-sectional view of the threshold plate.
Fig. 7 shows a cross-sectional view of a threshold plate in another example.
Fig. 8 shows an example of a light-emission control section for controlling the light emission from LEDs.

### DESCRIPTION OF THE PREFERRED EMBODIMENTS

The detailed description of a rolling stock as a preferred embodiment of the vehicle according to the present invention will be described below with reference to the drawings.

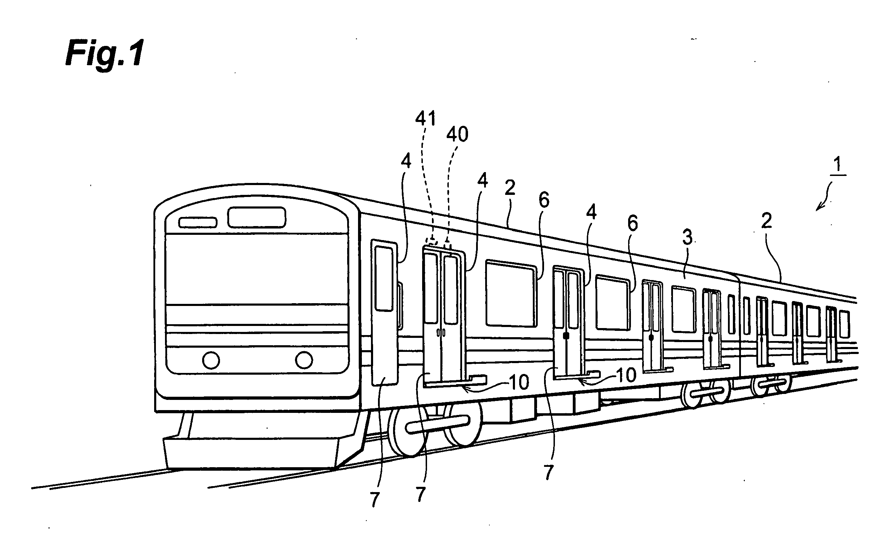

Fig. 1 shows a perspective view of a rolling stock as an embodiment of a vehicle according to the present invention. In a side frame 3 of a vehicle body 2 of a rolling stock 1 shown in Fig. 1, rectangular doorways 4 and windows 6 are formed. Each doorway 4 is equipped with a double-leaf door 7, which is opened or closed by automatic or manual operation.

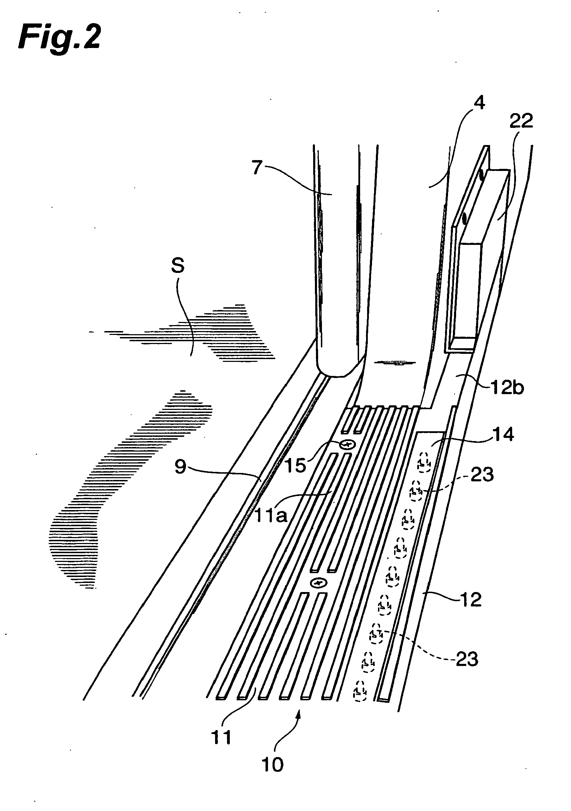

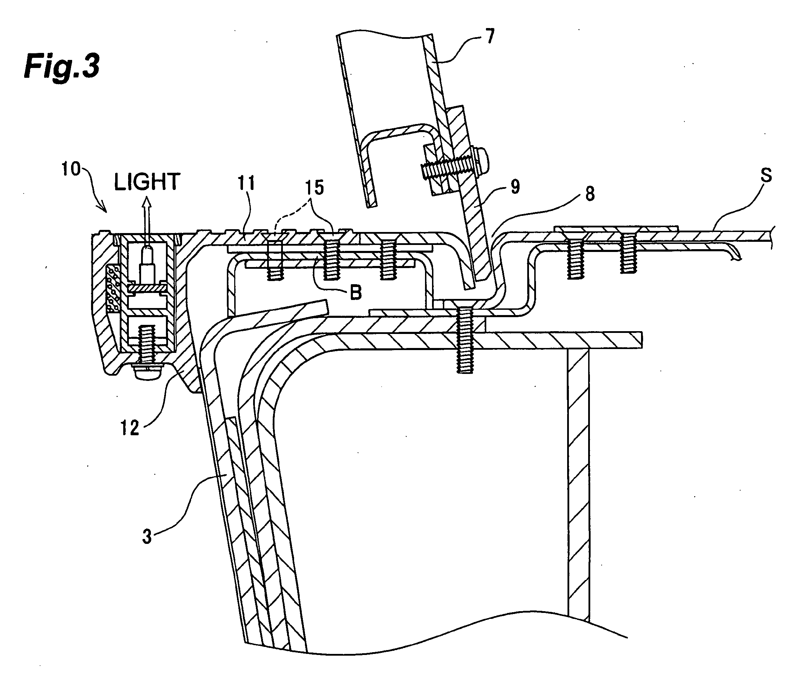

As shown in Fig. 2 and Fig. 3, a guide piece 9 is fixed to the lower end of doors 7 by screws. The guide piece 9 is inserted into a straight guide groove 8 located on a floor S side, which accomplishes a barrier-free entrance.

The doorway 4 is provided with a holder unit or a threshold plate 10. The threshold plate 10 intends to serve as a barrier-free entrance. The threshold plate 10 is fixed outside of the vehicle. The threshold plate 10 contributes, for example, to prevention of floor abrasion, reinforcement of a floor and slip prevention when passengers are getting on or off through doorways 4.

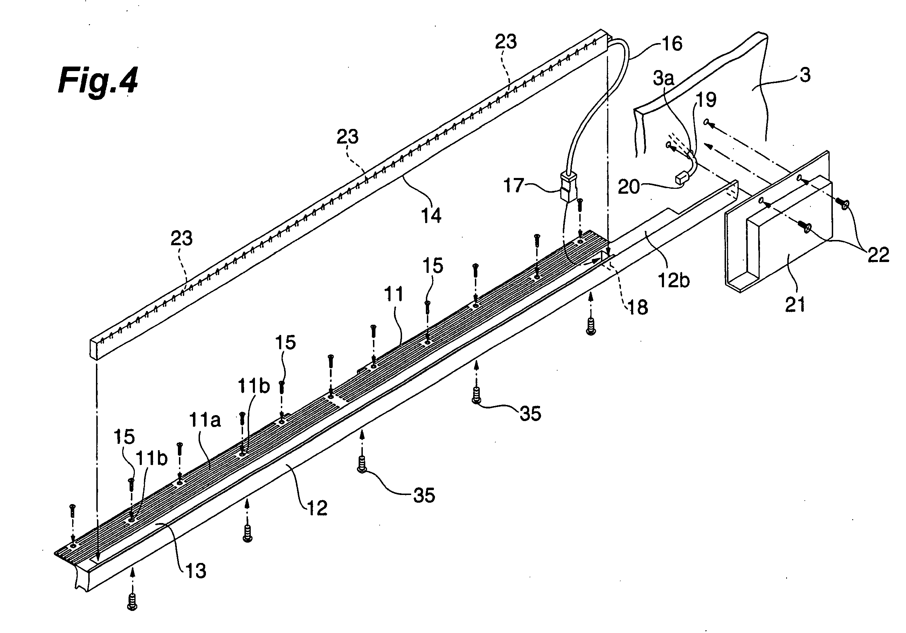

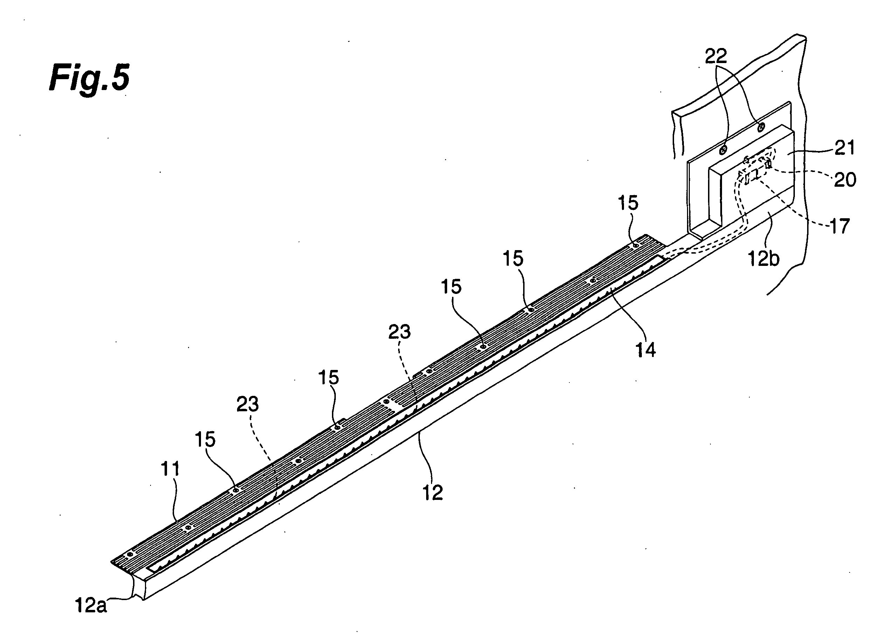

As shown in Fig. 4 and Fig. 5, the threshold plate 10 is provided with a step section 11 in flat plate shape. The step section 11 is made of, for example, aluminum or stainless steel. The step section 11 extends over the substantially whole width of the doorways 4 at the floor S side of the doorways 4.

Provided at the top face of the step section 11 is a slip stopper 11a which has an uneven shape and extends in the longitudinal direction thereof. That is, at the top face of the step section 11, concavities and convexes extending in the same direction with the width direction of the doorway 4, are formed alternately in a direction intersecting with the width direction. This slip stopper 11a ensures the safety on slippery surface on rainy or snowy days.

Furthermore, screw-insertion holes 11b are formed on the step section 11 of the threshold plate 10. The step section 11 is fixed to a doorway frame B via screws 15. The doorway frame B defines the doorway 4 at the side of floor S. The doorway frame B extends in the vehicle length direction.

The step section 11 is arranged at the substantially equal level with the floor S. That is, the step section 11 is located along a predetermined standard face, and the top face of the floor S inside the vehicle (floor face), is also located along the predetermined standard face. Specifically, the top face of the doorway frame B performs as a support face for supporting the step section 11, and the support face is positioned below the predetermined standard face. Supporting the step section 11 by this support face reduces the difference in the level between the top face of the step section 11 and the floor face, which accomplishes a barrier-free entrance (Refer to Fig. 3.).

At an outer end of the step section 11, a light-holder section 12 is integrally formed, protruding downward therefrom. That is, the light-holder section 12 is positioned below the floor face outside the vehicle body.

The light-holder section 12 provides a space for accommodating a light section 14. Formed At a top portion of the light-holder section 12 is an opening 13 in a long shape having substantially equal length with that of the step section 11. Via the opening 13, the light section 14 in a long shape is accommodated in the above-described space. That is, the light section 14 is arranged in such a way that it is positioned outside the vehicle along the lower edge of the doorway 4 extending in the width direction of the doorway 4, and emits light upward.

A connection cord 16 is extended from one end of the light section 14, and a connector terminal 17 is provided at an end of the connection cord 16. Furthermore, a tongue piece 12a is integrally formed at lower end of the light-holder section 12. The tongue piece 12a contacts with a lower portion of the side frame 3 below the doorway 4. The tongue piece 12a has the substantially same length as that of the light section 14, and achieves the holding of the light-holder section 12 by contacting to the surface of the side frame 3 (Refer to Fig. 3.). The light-holder section 12 projects outside the side frame 3. However, the projection stays within the vehicle gauge.

An extension section 12b is provided at an end of the light-holder section 12. A through hole 18 is formed in the light-holder section 12. The through hole 18 connects the space in the extension section 12b with the opening 13 of the light-holder section 12. The through hole 18 has a size allowing the connector terminal 17 to pass therethrough. The connector terminal 17 of the light section 14 side passes through the space in the extension section 12b along the side frame 3 to outside, and connects to a connector terminal 20 of a cord 19 of the power supply side extended outside from an opening 3a on the side frame 3.

Connector terminals 17 and 20 positioned outside the cabin are covered with a metallic connector-container case 21, and a lower end of the connector-container case 21 is held by contacting to an upper end of the extension section 12b. Furthermore, the connector-container case 21 is fixed to the side frame 3 of the vehicle body 2 by screws 22, and is detachable from the side frame 3. Therefore, the connector-container case 21 can be removed, when necessary, from the vehicle body 2. Consequently, when the connection between the connector terminal 17 of the light section 14 side and the connector terminal 20 of the vehicle body 2 side is released in a state of removing the connector-container case 21, the light section 14 can be pulled out from the opening 13 of the light-holder section 12. Even if a malfunction of LED (light source) 23 of the light section 14 occurs, the light section 14 is able to be replaced with a new light section 14 easily.

The step section 11 in flat plate shape provided to the above-described threshold plate 10 functions as a foot-step for passengers to get on or off the vehicle. Since the light section 14 is accommodated in the light-holder section 12 located at the outer end of the step section 11, lighting or flickering of LEDs (light source) 23 in the light section 14 permits the vehicle 1 side to warn the presence of a gap and a difference in level between the edge of the platform and the vehicle body 2, and further clearly indicates the presence of doorways 4 of the vehicle 1 to the physically handicapped persons, aged people, and others. The structure is particularly effective in the case where a platform does not give any clear indications of doorway (entrance) 4 positions of a vehicle 1. Therefore, adoption of such type of threshold plate 10 is extremely effective as a facility for smooth getting on or off the vehicle, hence it ensures effectively safety of passengers and the crew.

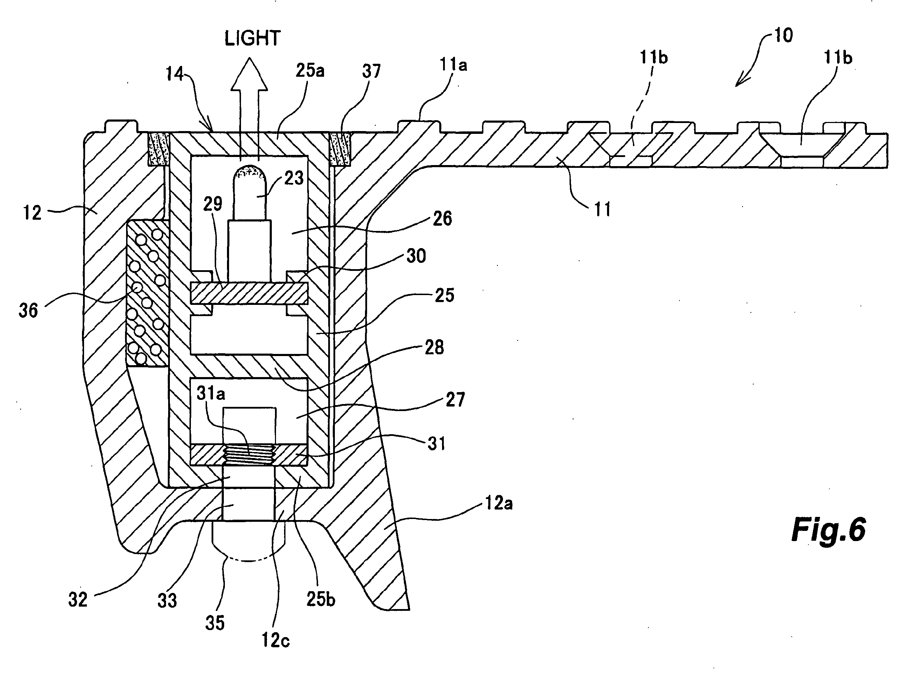

As shown in Fig. 5 and Fig. 6, the light section 14 has a translucent casing 25 made of resin. The casing 25 has a rectangular cross section in a long shape, and is accommodated in the above-described space provided by the light-holder section 12. High-luminance white LEDs (light sources) 23 are accommodated in a casing 25, being arranged in a row with an equal spacing therebetween in the door 7 extending direction, or in the width direction of the doorways. The light emitted from each LED 23 passes through a translucent upper wall 25a of the casing 25.

In the casing 25 of the light section 14, there are formed a water-tight light-source containing space 26 extending in the longitudinal direction at the upper portion of the light section 14 and a screw-containing space 27 extending in the longitudinal direction at the lower portion thereof. The light-source containing space 26 and the screw-containing space 27 are separated from each other by a partition 28, thus forming a vertical two-layer structure in the casing 25.

A plurality of LEDs 23 is accommodated in the light-source containing space 26. LEDs 23 are, for example, white LEDs, the quantity of which is about 50. LEDs 23 are fixed in a row on a substrate 29. By inserting the substrate 29 into an insertion groove 30 formed in the casing 25 from a side of the casing 25, LEDs 23 are fixed to the casing 25. Several LEDs 23 are connected electrically in series as a group, and each group is connected electrically in parallel with each other, thus it is avoided that all LEDs 23 arranged on the substrate 25 are turned off completely in case of wire-breaking, which secures a safety operation further more.

A metallic screw seat 31 is accommodated in the screw-containing space 27, and the screw seat 31 is adhered to fix to a bottom wall 25b of the casing 25. The screw seat 31 has a female screw section 31a at a predetermined position thereon. A screw-insertion hole 32 is formed in the bottom wall 25b of the casing 25 at a position corresponding to the female screw section 31a. A Through hole 33 is formed in a bottom wall 12c of the light-holder section 12 at a position corresponding to the screw-insertion hole 32. Accordingly, by screwing a screw 35 which are inserted into the through hole 33 and the screw-insertion hole 32 from beneath thereof to the female screw section 31a of the screw seat 31, the light section 14 can be fixed to the light-holder section 12.

Since the light section 14 is detachable from the light-holder section 12, LEDs 23 enables easy access in case of malfunction. Furthermore, adoption of LEDs as the light source 23 allows easy control of the lighting or flickering thereof. In addition, since the casing 25 is divided into the light-source containing space 26 and the screw-containing space 27 by the partition 28, when the light section 14 is fixed to the light-holder section 12 by screws 35, water penetrated through the screw-insertion holes 32 and/or the female screw sections 31a is hindered by the partition 28 from reaching the light-source containing section 26, thus the break of LEDs 23 is prevented.

On fixing the light section 14 to the light-holder section 12, a cushion material 36 is filled in between the casing 25 of the light section 14 and the inner wall face of the light-holder section 12 to prevent the light section 14 from chattering. Furthermore, a sealing material 37 is filled in the gap between the casing 25 and the light-holder section 12.

The lighting control of LEDs 23 is properly changed, when desired. For example, considering safety of passengers, it is preferred that the LEDs 23 are turned on just before opening doors 7, and that the LEDs 23 are turned off immediately after the door 7 is fully closed. In this case, execution of turn-on and turn-off control of LEDs 23 through linked operations of a door switch 40 (refer to Fig. 1) fixed at the upper end of the door 7 and a limit switch 41 (refer to Fig. 1) fixed at the vehicle body 2 side, makes the LED control linked with the open/close operation of the doors 7 easy. Moreover, the LEDs 23 may be flickered during the open/close operation of the doors 7. When passengers manually open the doors 7 on emergency, the LEDs 23 may be turned on.

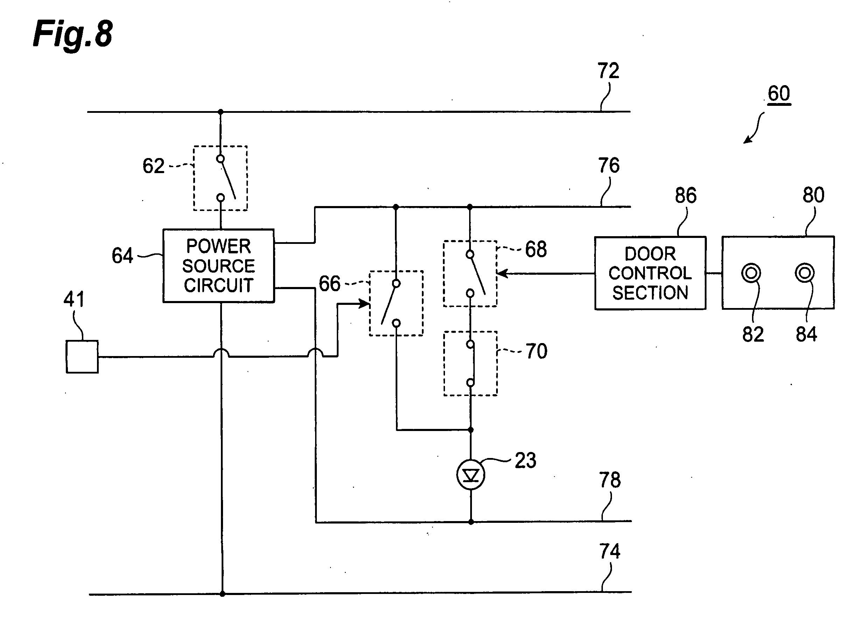

Fig. 8 illustrates an example of the light-emission control section which controls emission of light from LEDs. The light-emission control section 60 shown in Fig. 8 comprises a switch (the third switch circuit) 62, a power source circuit 64, a switch (the second switch circuit) 66, a switch (the first switch circuit) 68, and a switch 70. In the vehicle 1 which is provided with the light-emission control section 60 shown in Fig. 8, the doors 7 are to be manually opened. In this vehicle 1, driver's action on a release button 82 on the operation panel 80 located in the driver cab enables manual opening operation of doors 7, and by the action of a driver on a close button 84 on the operation panel 80, the automatic closing of the doors 7 is executed.

One terminal of the switch 62 is connected to a first power source line 72. To the first power source line 72, the power, for example, of 110 V is supplied. Another terminal of the switch 62 is connected to a power source circuit 64. The power source circuit 64 is connected to a second power source line 74, and converts the power received via the switch 62 into a power of a voltage of, for example, 24 V.

The switch 62 is a switch linked with ON and OFF of room lights. If room lights are ON, the switch 62 turns to ON to supply power from the first power source line 72 to the power source unit 64. Therefore, the light-emission control section 60 is arranged so that current is to be supplied to LEDs 23 only when light emission of LEDs 23 is particularly required such as during nighttime.

The power source circuit 64 has positive and negative potential lines 76 and 78, respectively. The positive potential line 76 is connected to a terminal of the switch 66 and a terminal of the switch 68.

The switch 66 is a switch linked with open and close of doors 7. In a state where the doors 7 are closed, the switch 66 turns to OFF to cutoff current, while in a state where the doors 7 are opened, the switch 66 turns to ON to allow current to pass therethrough. For example, when the door switch 40 touches the limit switch 41, the switch 66 turns to ON by receiving the signal transmitted from the limit switch 41.

The switch 68 is a switch linked with a release button 82 and a close button 84 on the operation panel 80 located in a driver cab. When the release button 82 is pressed down, the switch 68 turns to ON by receiving a release signal transmitted from a door control section 86 to allow current to pass therethrough. On the other hand, when the close button 84 is pressed down, the switch 68 turns to OFF by receiving a close signal transmitted from the door control section 86 to cutoff current.

The switch 68 is connected with a switch 70. When doors 7 of the vehicle 1 break down and are locked, the switch 70 turns to OFF.

In the light-emission control section 60, a route containing the switch 68 and the switch 70 and a route containing the switch 66 are connected in parallel to a positive electrode of LED 23, while a negative electrode of the LED 23 is connected to a second potential line 78.

The operation of the light-emission control section 60 having the above-described structure is described below. The switch 62 and the switch 70 are assumed to be at ON position. During running mode of a vehicle 1, doors 7 are closed, and manual operation of doors 7 is disabled, (or in a state that a close signal is supplied). Therefore, both the switch 66 and the switch 68 are in OFF position, and no current is supplied to LEDs 23. Consequently, in that state, LEDs 23 do not emit light.

When one of the crew presses down the release button 82 on the operation panel 80 in the occasion of stopping at a platform and the like, a release signal is transmitted to allow the manual opening of doors 7. On receiving a release signal, the switch 68 turns to ON to supply current to LEDs 23 via a route containing the switch 68. Then, once the manual opening of the doors 7 becomes available, the light-emission control section 60 makes LEDs 23 ready to emit the light even before opening doors 7 by passengers or other persons, whereby the presence of doorways can be notified on the spot of manual door opening operation of doors 7 start.

When the doors 7 are manually opened, the switch 66 turns to ON. In that state, when the close button 84 on the operation panel 80 is pressed down, a close signal is output, and the switch 68 turns to OFF with the close signal received to cutoff the current on the route containing the switch 68, thus the automatic closing operation of the door 7 starts. Once the doors 7 are fully closed, the switch 66 receives a signal from the limit switch 41 to turn to OFF, thus cutting off the current supply route to LEDs 23, whereby the light emission of LEDs 23 stops. According to the light-emission control section 60, LEDs 23 continues to emit light until the doors 7 come to closed position completely, which ensures higher degree of safety.

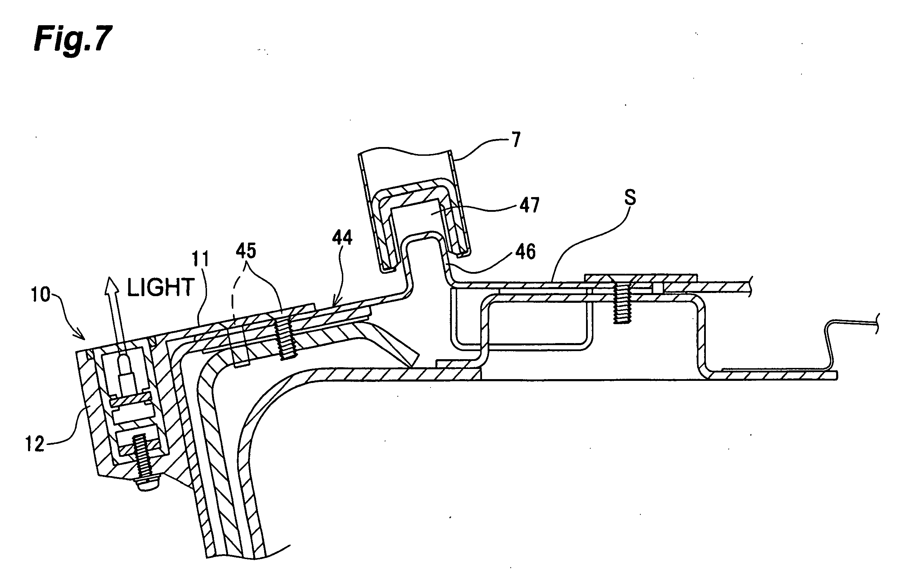

A preferred embodiment according to the present invention was described above. However, the present invention is not limited to the above embodiment. For example, as shown in Fig. 7, the threshold plate 10 may be fixed to a conventional threshold plate 44 by screws 45, thus readily applying to existing rolling stocks. A guide rail 46 of a door 7 may project from the floor S, and the guide rail 46 may be inserted into a guide groove 47 located at the bottom of the door 7. Alternatively, the threshold plate 10 may be fixed by screws at the threshold plate position of the cabin side near the door 7. In that case, the light-holder section 12 is buried in the floor S.

Furthermore, the resin casing 25 may be transparent or translucent, and the casing 25 may be formed by such a metal as aluminum to increase the strength thereof. If the casing 25 made of resin or metal is opaque, the top wall 25a is formed as a separate component by a transparent or translucent glass or resin. To increase luminance, the inner wall surface of the casing 25 may have a reflection film. The above-described threshold plate 10 may be applied to each step of a staircase in a double-decker.

As described above in a preferred embodiment according to the present invention, the present invention ensures further safety of passengers and the crew when getting on or off a vehicle. The above-described embodiment according to the present invention refers to rolling stocks. However, it is readily understood for the persons skilled in the art that the present invention is not limited to rolling stocks but is applicable to various vehicles including buses.

## Claims

1. A vehicle (1) comprising:
a door (7) for opening and closing a doorway (4) of a vehicle body (2);
a light section (14) for emitting light, the light section being provided along a lower edge of the doorway;
a holder unit (10) for attaching the light section to the vehicle body, wherein the holder unit comprising:
a step section (11) which is in flat plate shape and is fixed to the vehicle body substantially horizontally; and
a light-holder section (12) for providing a space in which the light section (14) is set, the light-holder section being provided on an outer end of the step section and being protruded downward from the step section;
and the vehicle further comprising:
an opening (13) for accommodating the light section (14) in a long shape within the space therefrom at an upper portion of the light-holder section, wherein the light section comprising:
a plurality of LEDs (23) being arranged in a width direction of the doorway; and
a casing (25) for accommodating the LEDs, wherein the casing comprising:
a partition for separating a water-tight light-source containing space (26) which is formed at an upper part of the casing and accommodates the LEDs (23), from a screw-containing space (27) which is formed at a lower part of the casing and accommodates a screw seat (31);
a bottom wall (25b) having an screw-insertion hole opened at a position corresponding to a position of a female screw formed in the screw seat; and
a top wall (25a) through which the light emitted from the LEDs (23) transmit.

2. The vehicle according to claim 1, wherein the light section is provided along the lower edge of the doorway outside the vehicle body.

3. The vehicle according to claim 1 or claim 2, wherein the light section emits the light upward.

4. The vehicle according to claim 1, 2 or 3 wherein the floor face inside the vehicle and the top face of the step section are arranged along a predetermined standard face.

5. The vehicle according to claim 4, further comprising a support face for supporting the step section, wherein the support face being located below the predetermined standard face.

6. The vehicle according to any one of claims 1, 4 or 5, wherein the light-holder section protrudes downward from the floor face outside the vehicle body.

7. The vehicle according to any one of claims 1, 4 to 6, wherein the top face of the step section has a slip stopper section which is an uneven shape.

8. The vehicle according to any one of claims 1, 4 to 7, further comprising a connector-container case (22) for containing a connector terminal of the light section, wherein the connector-container case is detachable from a side frame of the vehicle body.

9. The vehicle according to any one of claims 1 to 8, further comprising a light-emission control section which controls supply of current for emitting light from the light section, wherein the light-emission control section comprising:
a first switch circuit (68) which supplies current to the light section when receiving a release signal to enable the door to be opened, and stops current supply to the light section when receiving a close signal to close the door; and
a second switch circuit (66) which stops current supply to the light sections when the door is kept closed, and supplies current to the light section when the door is kept opened.

10. The vehicle according to claim 9, wherein the first switch circuit and the second switch circuit are arranged in parallel between an electric-potential line and an input terminal of the light section.

11. The vehicle according to claim 9 or claim 10, wherein the light-emission control section further comprising a third switch circuit (62) which stops current supply to the light section when a room light of the vehicle is kept turned off.

## Patentansprüche

1. Ein Fahrzeug (1) umfassend:
eine Tür (7) zum Öffnen und Schließen eines Türeinganges (4) eines Fahrzeugkörpers (2);
ein Lichtabschnitt (14) zur Emission von Licht, wobei der Lichtabschnitt entlang eines unteren Endes des Türeingangs zur Verfügung gestellt wird;
eine Haltevorrichtung (10) zum Anbringen des Lichtabschnitts an den Fahrzeugkörper, die Haltevorrichtung umfassend:
einen Trittbrettabschnitt (11), welcher von flacher und plattenähnlicher Form ist und der horizontal an dem Fahrzeugkörper befestigt ist; und
einen Lichthaltevorrichtungsabschnitt (12), der eine Aussparung zur Verfügung stellt, in welcher der Lichtabschnitt (14) gesetzt wird, wobei der Lichthaltevorrichtungsabschnitt an einem äußeren Ende des Trittbrettabschnitts zur Verfügung gestellt wird und der Lichthaltevorrichtungsabschnitt nach unten aus dem Trittbrettabschnitt herausragt;
das Fahrzeug weiter umfassend:
einen Spalt (13), der Platz für den Lichtabschnitt (14) in einer länglichen Form in einer Aussparung davon an einem unteren Teilbereich des Lichthaltevorrichtungsabschnitts bietet, der Lichtabschnitt umfassend:
eine Mehrzahl an LEDs (23), die in einer Breitenrichtung des Türeingangs angeordnet sind; und
eine Schutzhülle (25), in der die LEDs Platz finden, die Schutzhülle umfassend:
eine Trennwand zur Abtrennung einer wasserdichten Lichtquelle, welche eine Aussparung (26) beinhaltet, die in einem oberen Teil der Schutzhülle vorgesehen ist und in der die LEDs (23) Platz finden, von einer Schrauben beinhaltenden Aussparung (27), die in einem unteren Teil der Schutzhülle vorgesehen ist und in der eine Schraubensitzfläche (31) Platz findet;
eine Bodenwand (25b), die ein Schraubeneinführungsloch beinhaltet, welches an einer Stelle geöffnet ist, die mit einem Teil einer weiblichen Schraube übereinstimmt, die in der Schraubensitzfläche vorgesehen ist; und
eine Deckenwand (25a) durch welche das Licht welches von den LEDs (23) emittiert wird, hindurch tritt.

2. Ein Fahrzeug gemäß Anspruch 1, wobei der Lichtabschnitt entlang eines unteren Endes des Türeingangs außerhalb des Fahrzeugs zur Verfügung gestellt ist.

3. Ein Fahrzeug gemäß der Ansprüche 1 oder 2, wobei der Lichtabschnitt das Licht nach oben abstrahlt.

4. Ein Fahrzeug gemäß der Ansprüche 1, 2 oder 3, wobei die Fußbodenfläche im Innern des Fahrzeugs und die Oberfläche des Trittbrettabschnitts entlang einer vordefinierten Standardfläche angeordnet sind.

5. Ein Fahrzeug gemäß Anspruch 4, welches ferner eine Auflagefläche einschließt, um den Trittbrettabschnitt zu stützen, wobei die Auflagefläche unterhalb der vordefinierten Standardfläche fixiert ist.

6. Ein Fahrzeug gemäß einer der Ansprüche 1, 4 oder 5, wobei der Lichthaltevorrichtungsabschnitt nach unten von der Fußbodenfläche außerhalb des Fahrzeugkörpers hinausragt.

7. Ein Fahrzeug gemäß einer der Ansprüche 1, 4 bis 6, wobei die Oberfläche des Trittbrettabschnitts einen Rutschstoppabschnitt aufweist, welcher von unebener Form ist.

8. Ein Fahrzeug gemäß einer der Ansprüche 1, 4 bis 7, welches ferner ein Anschlussbehälter-Gehäuse (21) zur Aufnahme eines Anschlusselements des Lichtabschnitts aufweist, wobei das Anschlussbehälter-Gehäuse von einer Seitenleiste des Fahrzeugkörpers abnehmbar ist.

9. Ein Fahrzeug gemäß einem der Ansprüche 1 bis 8, welches ferner einen Lichtaussendungskontrollabschnitt aufweist, der die Stromversorgung zum Aussenden von Licht aus dem Lichtabschnitt kontrolliert, wobei der Lichtaussendungskontrollabschnitt umfasst:
einen ersten Schalter-Stromkreis (68), der den Lichtabschnitt mit Strom versorgt, sobald ein Entriegelungssignal empfangen wird, um die Tür zum Öffnen zu aktivieren, und der die Stromversorgung zum Lichtabschnitt beendet, sobald ein Verriegelungssignal empfangen wird, um die Tür zu schließen; und
einen zweiten Schalter-Stromkreis (66), der die Stromversorgung zum Lichtabschnitt beendet, wenn die Tür geschlossen bleibt, und der den Lichtabschnitt mit Strom versorgt, wenn die Tür geöffnet bleibt.

10. Ein Fahrzeug gemäß Anspruch 9, wobei der erste Schalter-Stromkreis und der zweite Schalter-Stromkreis parallel zwischen einer elektrischen Potenziallinie und eines Eingabeelements des Lichtabschnitts angeordnet sind.

11. Ein Fahrzeug gemäß Anspruch 9 oder 10, wobei der Lichtaussendungskontrollabschnitt ferner einen dritten Schalter-Stromkreis (62) aufweist, der die Stromversorgung zum Lichtabschnitt beendet, wenn ein Raumlicht des Fahrzeugs ausgeschaltet bleibt.

## Revendications

1. Véhicule (1) comprenant :
une porte (7) pour ouvrir et fermer une embrasure de porte (4) d'une carrosserie de véhicule (2) ;
une partie lumineuse (14) pour émettre de la lumière, la partie lumineuse étant située le long d'un bord inférieur de l'embrasure de porte ;
un élément de support (10) pour fixer la partie lumineuse à la carrosserie de véhicule, dans lequel l'élément de support comprend :
une partie marchepied (11) qui a une forme semblable à une plaque plate et qui est fixée à la carrosserie de véhicule de manière sensiblement horizontale ; et
une partie support de lumière (12) pour fournir un espace dans lequel la partie lumineuse (14) est mise, la partie support de lumière étant située sur une extrémité externe de la partie marchepied et faisant saillie vers le bas depuis la partie marchepied ;
et le véhicule comprenant en outre :
une ouverture (13) pour recevoir la partie lumineuse ayant une forme longue dans l'espace de celle-là au niveau d'une partie supérieure de la partie support de lumière, et où la partie lumineuse comprend :
une pluralité de diodes électroluminescentes (DEL) (23) qui sont disposées dans le sens de la largeur de l'embrasure de porte ; et
un carter (25) pour recevoir les DEL, dans lequel le carter comprend :
une séparation pour séparer un espace contenant la source lumineuse étanche à l'eau (26) qui est formé au niveau d'une partie supérieure du carter et qui reçoit les DEL (23), d'un espace contenant des vis (27) qui est formé au niveau d'une partie inférieure du carter et qui comporte un logement pour vis (31) ;
une paroi inférieure (25b) ayant un trou d'insertion de vis ouvert à une position correspondant à une position d'une vis femelle formée dans le logement pour vis ; et
une paroi supérieure (25a) à travers laquelle se transmet la lumière émise des DEL (23).

2. Véhicule selon la revendication 1, dans lequel la partie lumineuse est prévue le long du bord inférieur de l'embrasure de porte à l'extérieur de la carrosserie de véhicule.

3. Véhicule selon la revendication 1 ou la revendication 2, dans lequel la partie lumineuse émet la lumière vers le haut.

4. Véhicule selon la revendication 1, 2 ou 3, dans lequel la face de sol à l'intérieur du véhicule et la face supérieure de la partie marchepied sont disposées le long d'une face standard prédéterminée.

5. Véhicule selon la revendication 4, comprenant en outre une face de support pour supporter la partie marchepied, dans lequel la face de support est située en dessous de la face standard prédéterminée.

6. Véhicule selon l'une quelconque des revendications 1 4 ou 5, dans lequel la partie support de lumière fait saillie vers le bas depuis la face au sol vers l'extérieur de la carrosserie de véhicule.

7. Véhicule selon l'une quelconque des revendications 1, 4 à 6, dans lequel la face supérieure de la partie de marchepied a une partie anti-glissement qui présente une forme irrégulière.

8. Véhicule selon l'une quelconque des revendications 1, 4 à 7, comprenant en outre un boîtier pour connecteur (22) pour contenir une borne de connecteur de la partie lumineuse, dans lequel le boîtier pour connecteur est détachable d'un châssis latéral de la carrosserie de véhicule.

9. Véhicule selon l'une quelconque des revendications 1 à 8, comprenant en outre une partie de commande d'émission de lumière qui commande la fourniture du courant pour émettre de la lumière depuis la partie lumineuse, dans lequel la partie de commande d'émission de lumière comprend :
un premier circuit de commutation (68) qui fournit du courant à la partie lumineuse en cas de réception d'un signal de libération pour permettre que la porte soit ouverte, et qui arrête la fourniture de courant à la partie lumineuse en cas de réception d'un signal de fermeture pour fermer la porte ; et
un deuxième circuit de commutation (66) qui arrête la fourniture de courant aux parties lumineuses lorsque la porte reste fermée et qui fournit le courant à la partie lumineuse lorsque la porte reste ouverte.

10. Véhicule selon la revendication 9, dans lequel le premier circuit de commutation et le deuxième circuit de commutation sont disposés en parallèle entre une ligne de potentiel électrique et une borne d'entrée de la partie lumineuse.

11. Véhicule selon la revendication 9 ou la revendication 10, dans lequel la partie de commande d'émission de lumière comprend en outre un troisième circuit de commutation (62) qui arrête la fourniture de courant à la partie lumineuse lorsqu'une lumière de plafonnier du véhicule reste éteinte.
